# EUROPEAN PATENT SPECIFICATION

(11) **EP 1 748 924 B1**
(45) Date of publication and mention of the grant of the patent: **11.03.2009**
(21) Application number: 05752736.8
(22) Date of filing: 24.05.2005
(51) Int. Cl.: B64C 1/14

(54) **WINDOW FRAME FOR AIRCRAFT**
FENSTERRAHMEN FÜR LUFTFAHRZEUGE
ENCADREMENT DE HUBLOT POUR AVION

(30) Priority: 24.05.2004 DE 102004025380; 09.08.2004 US 600101 P
(43) Date of publication of application: 07.02.2007
(73) Proprietor: Airbus Deutschland GmbH, 21129 Hamburg (DE)
(72) Inventor: BOLD, Jens, 20255 Hamburg (DE)
(74) Representative: Kopf, Korbinian Paul
(86) International application number: PCT/EP2005/005605
(87) International publication number: WO 2005/115839

(56) References cited:
- WO-A-83/01237
- WO-A-20/04016844
- DE-A1- 10 251 579
- US-A1- 2003 168 775

## Description

### Field of the invention

The invention relates to aircraft windows. In particular, the present invention relates to a window frame for installation in the exterior shell of an aircraft and to a method for making the window frame.

### Technological Background

In most of the aircraft made and in operation today, window frames made of aluminum are used, which comprise a part which is made by forging, truing and cupping. The window frame is organized into a total of three regions: an outer flange, an inner flange, and a vertical flange arranged perpendicular to and between these two flanges. The window frames are typically connected with two rows of rivets over the outer flange with the aircraft structure or with the exterior shell of the aircraft. A window element rests on the inner flange, which typically comprises two panes and a sealing arranged therebetween and which is fixed in its position via a retainer or downholder, which is connected with the window frame.

In addition to fixing the window element, such a window frame also has the function of absorbing the strain increase, which occurs on the edge of the comparably large cut-out for the window mounted in the load-transferring exterior shell. The outer flange of the window frame thereby, serves, on the one hand, for reinforcement of this cut-out and on the other hand, via the outer flange, the frame and the exterior shell are connected to one another by means of rivets. Since the manufacture of the known aluminum window frame typically takes place by means of forging, it is not possible to achieve a cross-sectional distribution of the frame profile that is favorable for the rivet force distribution, since the slant of the flange may amount to a maximum of approximately two angular degrees, in order to enable a simple riveting.

The inner flange serves to receive the window element, whereby here a slanting of the mounting of the window is simplified. Simultaneously, the existing load from the interior pressure, which prevails in the passenger cabin, is transferred via this inner flange to the exterior shell of the aircraft.

The vertical flange usually serves exclusively as a reinforcement rib on the frame, in order to minimize the tension in the exterior shell with the least possible weight. On this vertical flange, also the eye bolts are attached, with which, typically, the downholder or retainer for the window elements are held in their position. At the same time, the vertical flange also forms the guide upon mounting of the window element.

US 2003/168 775 A1 describes the process of shaping a fiber textile semi-finished material.

WO 83/01 237 A describes the process of making a composite structure window belt with diamond-shaped window frames.

WO 2004/016 844 A describes the process of making a three-dimensional, ring-shaped preform made of fiber-reinforced composite material with a circumferentially aligned fiber structure.

### Summary of the invention

It may be an object of the present invention to provide a window, which may make possible a considerable weight savings compared to the window frames used today for this application. At the same time, the costs for the manufacture of such a window frame are desired to lie as low as possible. In addition, a simple and most cost-effective method for making such a window frame may be desirable.

The above problems are solved by the window frame according to claim 1.

According to an exemplary embodiment, a window frame for installation in the exterior shell of an aircraft is provided, comprising an outer flange, an inner flange, and a vertical flange arranged perpendicular to and between these flanges. The connection with the aircraft structure takes place via the outer flange. On the' inner flange, a window element to be held is attached, which is held via the vertical flange.

In addition, the present invention relates to a method for making such a window frame. According to an aspect, a window frame may comprises a fiber-reinforced thermoplastic material.

According to a further aspect, a method is provided, in which a semifinished part made from a webbing is inserted into a molding tool, in which resin is injected under pressure and temperature, and with which the component developed in this manner is subsequently hardened in the molding tool.

Because the present invention contemplates the use of window frame made in a fiber composition construction with a webbing placed to be load-suitable, in which the fibers follow the load direction, so to speak, and which, compared to the aluminum window frames used up to now, a weight savings of up to 50 percent may be possible. Based on its layer structure optimized according to the present invention, the window frame of the present invention may have another weight advantage of approximately 20 percent at the same time relative to the fiber window frames, which are made from a semifinished part with quasi-isotropic layer structure. In spite of this great weight savings potential, the costs for such a component, compared to a window frame made from an aluminum forged part, are believed to not rise.

At the same time, it may be possible to make the fiber window frame according to the present invention with a tolerance of only approximately 0.2 mm with an average wall thickness of 5 mm, which corresponds to a manufacturing tolerance of approximately 4 percent. With aluminum forged frames, in contrast, depending on the manufacturing method, tolerances of approximately 1.5 mm are accepted, which corresponds to a manufacturing tolerance of approximately 30 percent with the same will thickness. Therefore, by means of the present invention, not only the weight fluctuations between the individual window frames are believed to be substantially reduced, but also, at the same time, the installation of the frame in an aircraft or the mounting of the window element in the frame is believed to be simplified. Finally, further advantages which are believed to be achieved are increased safety as well as a greatly improved thermal insulation of the window frame according to the invention.

### Short description of the drawings

Next, the invention will be described in greater detail with reference to one embodiment shown in the accompanying figures. In the figures:
- Fig. 1: shows a window frame in perspective view;
- Fig. 2: shows a detail section through the installation position of a window frame according to Fig. 1;
- Fig. 3: shows a part of a molding tool for making a window frame of Fig. 1 in an opened position;
- Fig. 4: shows the molding tool of Fig. 3 in a closed position;
- Figs. 5 and 6: show a representation of the main directions with a window frame of Fig. 1, whereby Fig. 6 is a detail representation of the region in Fig. 5 designated with VI;
- Fig. 7: shows the directions of a load-suitable structure of the window frame of Fig. 1 in a principle representation;
- Fig. 8: shows the structure of a preform in a sectional view; and
- Figs. 9-12: show the fiber progression in different regions of the window frame of Fig. 1.

### Detailed description of exemplary embodiments

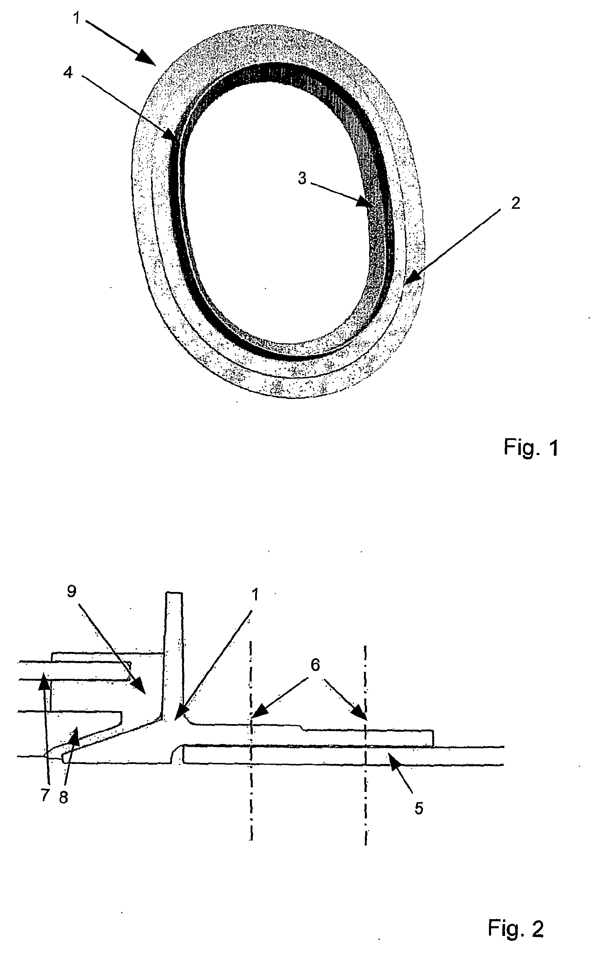

The window frame 1 shown in Fig. 1 is made with a fiber construction and, like the known aluminum forged frames, also has an outer flange 2, an inner flange 3, as well as a vertical flange 4 arranged between these two flanges. In contrast to common aluminum window frames, the outer flange 2 in this case, however, has a uniform circumferential edge. In addition, this outer flange 2, in contrast to a corresponding aluminum forged part has a varying thickness in different radial regions. This leads to a substantially improved material utilization in the region of the riveting and the shell cut-out. Fig. 2 more clearly shows this in a detail section, in which the installation position of such a window frame 1 in the outer shell 5 of an aircraft is shown. Also important in this figure are the rivet positions 6 for the connection of the frame with the outer shell 5, as well as two window panes 7 and 8, which together with a sealing 9, form the window element.

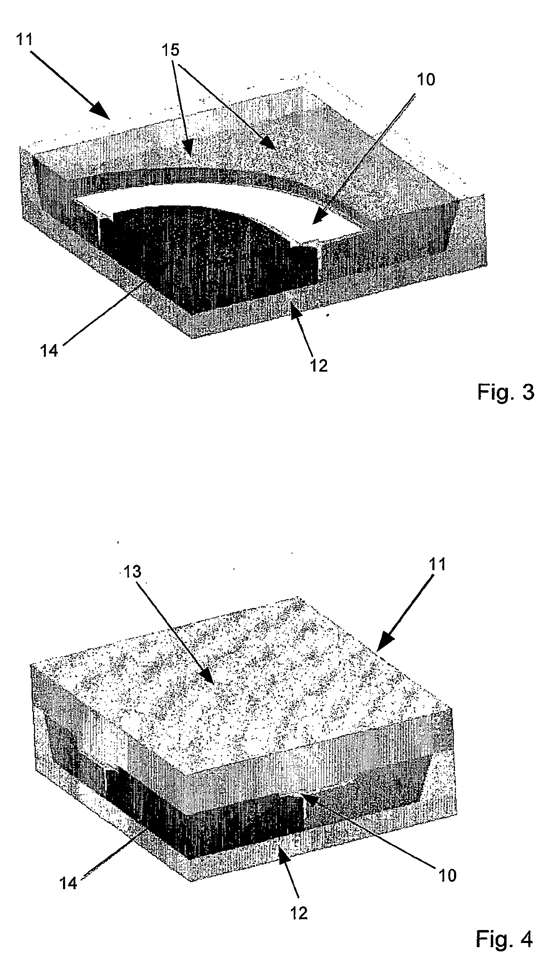

The window frame 1 is made by means of the so-called "resin-transfer-molding" or RTM technology. In this connection, first a mold part 10, the so-called perform, is made from fibers. This is next placed in a two-part molding tool 11, as shown in Figs. 3 and 4. Within a lower molding tool 12 and an upper molding tool 13, an inner core 14 and an outer core 15, in this case formed in two parts, are arranged. The perform 10 is inserted between the two cores 14 and 15, the molding tool 11 is closed, and under pressure and temperature, resin is injected into the molding tool. The complete component 1 subsequently is hardened within the molding tool 11. The preform can either be made as a complete part or in the so-called sub-preform technology, in which the complete window frame 1 is combined from individual substructure- elements or sub-preforms.

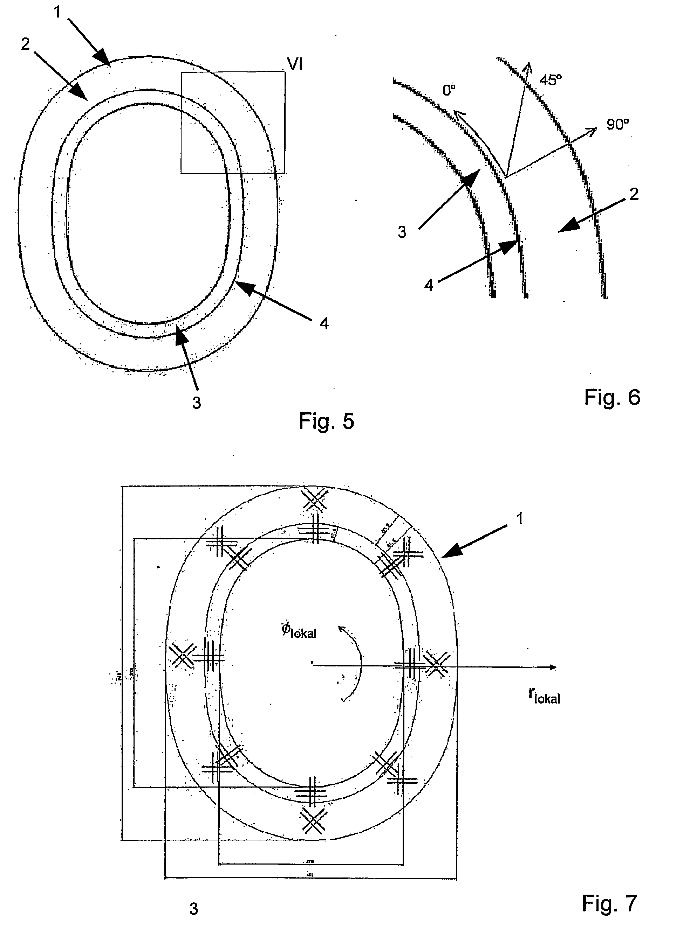

In each case, the preform 10 comprises individual layers of a reinforced web, which are arranged in different layers. The direction of the individual fibers in the individual web layers is critical for the weight savings achievable with the window frame 1 described here. A fiber direction, which is not circumferential in the frame, could not achieve the weight savings that are achieved with the arrangement described herein. The principle layer direction with the main directions 0°, 45°, and 90° are shown in Figs. 5 and 6. The 0° direction therefore represents the circumferential direction of the window frame 1, the 90° direction runs in the radial direction, and the 45° direction runs in the region of the transition from the vertical flange 4 to the outer flange 2.

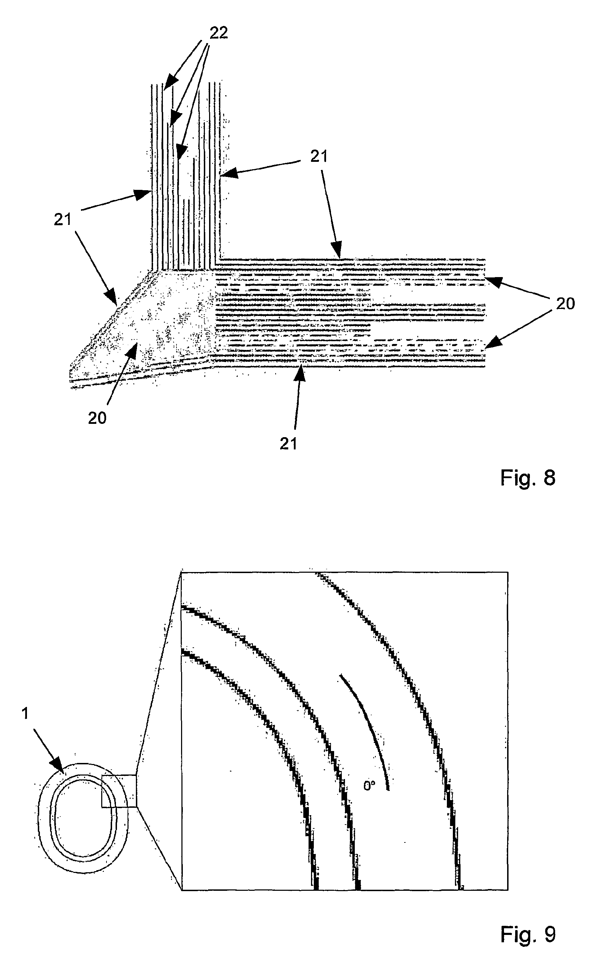

The fiber progression is detailed in Figures 7 through 12. First, Fig. 7 shows in principle representation the directions of a load-suitable layer structure of the window frame 1 and Fig. 8 shows a section through the layer structure of the fiber bundle. In this figure, reference numeral 20 designates the 0° hub in the inner flange, reference numeral 21 designates the ± 60° layers in all outer regions as well, as well as the ± 60° layers extending from the outer flange 2 to the inner flange 3, and reference numeral 22 designates the fiber bundle with 0° and 90° layers in the region of the vertical flange 4. These layer directions are measured on the interface of the outer flange 2, inner flange 3, and vertical flange 4. The layer structure outside of these regions will be described subsequently with reference to Figs. 9 through 12, in which, respectively, the cut-out of the window frame 1 shown in the left part of the figure 1 As can be seen from these figures, the following details are provided for the curvilinear placed web semifinished parts:

### Vertical flange 4:

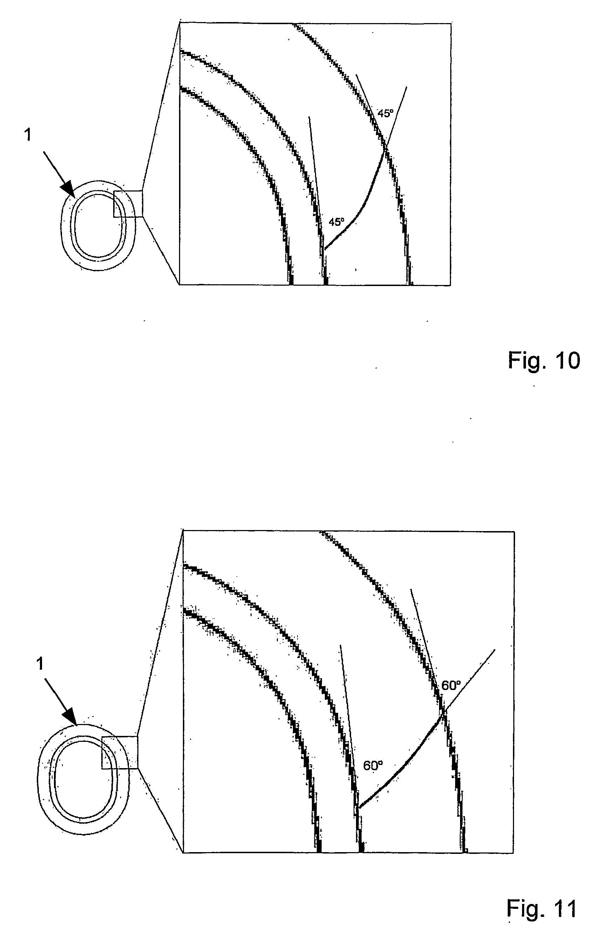

- All fibers remain in the direction, in which they were measured; Inner flange 3 and outer flange 2:
- 0° fibers remain in the direction, in which they were measured (Fig. 9);
- ± 45° fibers remain in the direction, in which they were measured, but are curved (Fig. 10);
- ± 60° fibers remain in the direction, in which they were measured, but are curved (Fig. 11).

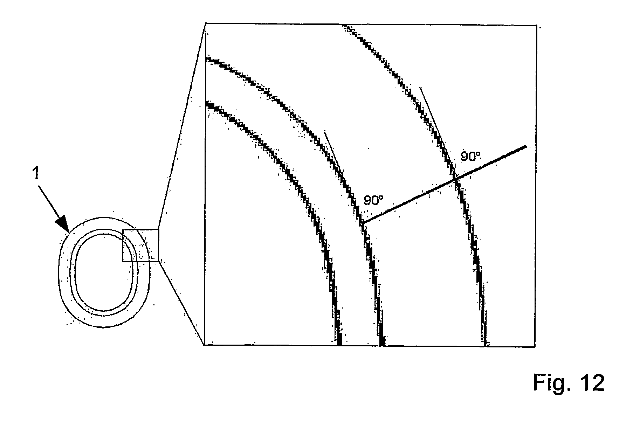

Finally, Fig. 12 shows the 90° fiber in the radius direction. Altogether, a quasi-isotropic radial straight structure is provided, in which the fibers always run in the load direction and are straight.

The window frame 1 made in this manner is believed to have approximately 50 percent weight savings with approximately the same manufacturing costs compared to the common aluminum window frames, Its tolerances are believed to lie essentially lower than the tolerances of the corresponding aluminum components. At the same time, it is believed that the frame offers higher safety and better thermal insulation than the common aluminum window frame.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. Window frame (1) for installation in an exterior shell (5) of an aircraft with an aircraft structure, the window frame (1) comprising:
an outer flange (2);
an inner flange (3);
a vertical flange (4);
a window element (7,8,9);
wherein the vertical flange (4) is arranged essentially perpendicular to the outer and inner flanges (2,3) and between the outer and inner flanges (2,3);
wherein the outer flange (2) is adapted for forming a connection to the aircraft structure;
wherein the window element (7,8,9) abuts against the inner flange (3) and is supported by the vertical flange (4);
wherein the window frame (I) consists of resin reinforced with fiber webbing semifinished parts (10);
wherein the fiber webbing semifinished parts (10) are made of individual layers of a reinforced web (20, 21, 22); **characterised in that**
the individual layers of the reinforced web (20, 21, 22) each comprise individual fibers with a predetermined fiber direction; and
the fibers comprise a curved radial progression for remaining in the predetermined fiber direction;
the fiber direction follows a mechanical load direction.

2. Method for making the window frame of claim 1, comprising the steps of:
inserting the semifinished part (10), comprising a fiber bundle, made from differently placed webs (20, 21, 22), wherein a direction of progression of the fiber bundle follows a mechanical load direction, in a molding tool (11);
performing an injection of resin while applying temperature and pressure to the semifinished part (10) in the molding tool (11); and
subsequently hardening the semifinished part (10) after the injection in the molding tool (11) for forming the window frame (1).

## Patentansprüche

1. Fensterrahmen (1) zum Einbau in die Außenhaut (5) eines Flugzeuges mit einer Flugzeugstruktur, der Fensterrahmen (1) aufweisend:
einen äußeren Flansch (2);
einen inneren Flansch (3);
einen vertikalen Flansch (4);
ein Fensterelement (7,8,9)
wobei der vertikale Flansch (4) senkrecht zu dem äußerem und dem innerem Flansch (2,3) und zwischen dem äußeren und dem inneren Flansch (2,3) angeordnet ist,
wobei der äußere Flansch (2) eingerichtet ist eine Verbindung mit der Flugzeugstruktur herzustellen,
wobei das Fensterelement (7,8,9) am inneren Flansch (3) zur Anlage kommt und durch den vertikalen Flansch (4) gehalten wird,
wobei der Fensterrahmen (1) aus Harz verstärkt mit Fasergewebehalbzeugen (10) besteht,
wobei die Fasergewebehalbzeuge (10) aus einzelnen Schichten eines verstärkten Gewebes (20,21,22) bestehen
**dadurch gekennzeichnet, dass**
jede der einzelnen Schichten des verstärkten Gewebes (20,21,22) einzelne Fasern mit einer definierten Faserrichtung aufweist;
die Fasern einen gekrümmten radialen Verlauf aufweisen um die definierte Faserrichtung beizubehalten;
die Faserrichtung einer mechanischen Belastungsrichtung folgt.

2. Verfahren zur Herstellung des Fensterrahmens gemäß Anspruch 1, aufweisend:
Einbringen des Halbzeugs (10) in ein Formwerkzeug (11), das Halbzeug (10) aufweisend ein aus unterschiedlich gelegten Geweben (20, 21, 22) gebildetes Faserbündel, wobei die Verlaufsrichtung des Faserbündels einer mechanischen Belastungsrichtung folgt;
Einspritzen von Harz unter Temperatur und Druckeinwirkung auf das Halbzeug (10) im Formwerkzeug (11); und
nachfolgendes Aushärten des Halbzeugs (10) nach dem Einspritzen im Formwerkzeug (11) zur Erzeugung des Fensterrahmens (1).

## Revendications

1. Encadrement de hublot (1) pour une installation dans une coque extérieure (5) d'un avion avec une structure d'avion, l'encadrement de hublot (1) comportant :
un rebord extérieur (2),
un rebord intérieur (3),
un rebord vertical (4),
un élément de hublot (7, 8, 9),
le rebord vertical (4) étant agencé sensiblement perpendiculaire aux rebords extérieur et intérieur (2, 3) et entre les rebords extérieur et intérieur (2, 3),
le rebord extérieur (2) étant adapté pour former un assemblage avec la structure d'avion,
l'élément de hublot (7, 8, 9) venant en butée contre le rebord intérieur (3) et étant supporté par le rebord vertical (4),
l'encadrement de hublot (1) étant constitué de résine renforcée par des pièces semi-finies en voile de fibres (10),
les pièces semi-finies en voile de fibres (10) étant constituées de couches individuelles d'un voile renforcé (20, 21, 22), **caractérisé en ce que**
les couches individuelles du voile renforcé (20, 21, 22) comportent chacune des fibres individuelles ayant une direction de fibre prédéterminée, et
les fibres ont une progression radiale incurvée pour rester dans la direction de fibre prédéterminée,
la direction de fibre suit une direction de charge mécanique.

2. Procédé de fabrication de l'encadrement de hublot de la revendication 1, comportant les étapes consistant à :
insérer la pièce semi-finie (10), comportant un faisceau de fibres, fabriquée à partir de voiles placés différemment (20, 21, 22), dans laquelle une direction de progression du faisceau de fibres suit une direction de charge mécanique, dans un outil de moulage (11),
effectuer une injection de résine tout en appliquant une température et une pression à la pièce semi-finie (10) dans l'outil de moulage (11), et
durcir ensuite la pièce semi-finie (10) après l'injection dans l'outil de moulage (11) pour former l'encadrement de hublot (1).
